# EUROPÄISCHE PATENTANMELDUNG

(11) **EP 1 339 124 A1**
(43) Veröffentlichungstag der Anmeldung: **27.08.2003**
(21) Anmeldenummer: 02003907.9
(22) Anmeldetag: 21.02.2002
(51) Int. Cl.: H01M 8/04

(54) **Verfahren zum Betreiben einer Brennstoffzelle und Brennstoffzellenanordnung**

(71) Anmelder: SIEMENS AKTIENGESELLSCHAFT, 80333 München (DE)
(72) Erfinder: Zametzer, Georg, 91301 Forchheim (DE)

(57) **Zusammenfassung**

Verfahren zum Betreiben einer Brennstoffzelle und Brennstoffzellenanordnung

Für eine zuverlässige und schnelle Überwachung einer Brennstoffzelle wird erfindungsgemäß bei einem Verfahren zum Betreiben einer Brennstoffzelle (2) ein Messsignal (M) von der Brennstoffzelle (2) erfasst und einer integrierten Schaltung (24) zur Verarbeitung zugeführt, wobei das Messsignal mittels der integrierten Schaltung (24) zu einem den Grad der Funktionsfähigkeit der Brennstoffzelle (2) repräsentierenden Ausgangssignal (A) verarbeitet wird.

## Beschreibung

Die Erfindung bezieht sich auf ein Verfahren zum Betreiben einer Brennstoffzelle oder einer Brennstoffzellenanordnung mit einer Mehrzahl von hintereinander geschalteten Brennstoffzellen. Sie betrifft weiter eine derartige Brennstoffzellenanordnung.

Brennstoffzellen können zur umweltfreundlichen Erzeugung von Elektrizität dienen. In einer Brennstoffzelle läuft dafür ein Prozess ab, der im wesentlichen eine Umkehrung der Elektrolyse darstellt. In einer Brennstoffzelle wird dabei ein Wasserstoff aufweisender Brennstoff einer Anode und ein Sauerstoff aufweisender Hilfsstoff einer Kathode zugeleitet. Anode und Kathode sind elektrisch über eine Elektrolytschicht voneinander getrennt, wobei die Elektrolytschicht zwar einen Ionenaustausch zwischen dem Brennstoff und dem Sauerstoff zulässt, ansonsten aber eine gasdichte Trennung von Brennstoff und Hilfsstoff sicherstellt. Infolge des Ionenaustauschs kann im Brennstoff enthaltener Wasserstoff mit dem Sauerstoff zu Wasser reagieren, wobei sich an der brennstoffseitigen Elektrode oder Anode Elektronen anreichern und an der hilfsstoffseitigen Elektrode oder Kathode Elektronen aufgenommen werden. Somit baut sich beim Betrieb der Brennstoffzelle eine Potentialdifferenz oder Spannung zwischen Anode und Kathode auf. Die Elektrolytschicht, die bei einer Hochtemperatur-Brennstoffzelle als keramischer Festelektrolyt oder bei einer Niedertemperatur-Brennstoffzelle als Polymer-Membran ausgebildet sein kann, hat somit die Funktion, die Reaktanten voneinander zu trennen, die Ladung in Form von Ionen zu überführen und einen Elektronenkurzschluss zu verhindern.

Aufgrund der elektrochemischen Potentiale der üblicherweise eingesetzten Stoffe kann in einer derartigen Brennstoffzelle unter normalen Betriebsbedingungen eine Elektrodenspannung von etwa 0,6 bis 1,0 V aufgebaut und während des Betriebs aufrechterhalten werden. Für technische Anwendungen, in denen abhängig vom Einsatzzweck oder der geplanten Belastung eine wesentlich höhere Gesamtspannung gefordert sein kann, sind daher üblicherweise eine Mehrzahl von Brennstoffzellen in der Art eines Brennstoffzellenstapels derart elektrisch in Reihe geschaltet, dass die Summe der von den Brennstoffzellen jeweils gelieferten Elektrodenspannungen der geforderten Gesamtspannung entspricht oder diese übersteigt. Je nach geforderter Gesamtspannung kann die Anzahl der Brennstoffzellen in einem derartigen Brennstoffzellenstapel beispielsweise 50 oder mehr betragen.

Bei Verwendung eines derartigen Brennstoffzellenstapels in einer Brennstoffzellenanordnung kann es bedeutsam sein, jede einzelne Brennstoffzelle kontinuierlich oder zyklisch auf ihre Funktionsfähigkeit hin zu überwachen. Infolge von Alterung oder anderen Einflüssen kann nämlich beispielsweise ein lochartiger Defekt in der Elektrolytschicht einer Brennstoffzelle auftreten, so dass der im Brennstoff enthaltene Wasserstoff in unmittelbaren Kontakt mit dem Sauerstoff gelangen könnte. Dabei könnte eine mit Energiefreisetzung verbundene katalytische Verbrennung von Wasserstoff eintreten, die sich bei aufrechterhaltener Gaszufuhr zur Brennstoffzelle ausweiten und den betroffenen Schadensbereich noch vergrößern könnte. Für einen sicheren und zuverlässigen Betrieb eines derartigen Brennstoffzellenstapels sind daher üblicherweise Mittel vorgesehen sein, die bei eintretenden Funktionsstörungen und insbesondere bei auftretendem Gasdurchbruch durch die Elektrolytschicht die Gaszufuhr zur betroffenen Brennstoffzelle innerhalb kürzester Reaktionszeit unterbrechen, um somit eine Schadensausweitung sicher zu vermeiden.

Zur Feststellung eines derartigen Störfalls oder Gasdurchbruchs kann die von der jeweiligen Brennstoffzelle gelieferte Elektrodenspannung als geeigneter Überwachungsparameter dienen. Ein Gasdurchbruch in einer Brennstoffzelle äußert sich nämlich unter anderem durch ein charakteristisches Absinken der Elektrodenspannung. Bei ansonsten bekannten Betriebsparametern kann somit für eine Brennstoffzelle, abhängig beispielsweise von ihrer Dimensionierung, ein charakteristischer Grenzspannungswert vorgegeben werden. Bei einem Absinken der Elektrodenspannung unter diesen Grenzspannungswert wird vom Eintreten eines Störfalls der genannten Art ausgegangen und die Gaszufuhr zur betroffenen Brennstoffzelle unterbrochen. Gerade für eine Brennstoffzellenanordnung mit einer großen Vielzahl von Brennstoffzellen ist jedoch die Überwachung der individuellen Elektrodenspannungen vergleichsweise aufwändig.

Zur individuellen Spannungsmessung an jeder einzelnen Brennstoffzelle vorgesehene Messsysteme umfassen beispielsweise vorgeschaltete Trennverstärker zur Potentialtrennung in jedem Messkanal. Dabei kann eine Weiterverarbeitung der abgegriffenen Zellspannungssignale zur Bildung eines Abschaltsignals mittels jeweils vorgesehener Spannungskomparatoren erfolgen, die mit einer Auswerteeinheit zur Bildung des jeweiligen Abschaltsignals bei Unterschreitung eines fest vorgegebenen Spannungsgrenzwerts verbunden sind. Eine derartige Auswerteeinheit, die die individuelle Erfassung von Elektrodenspannungen einzelner Brennstoffzellen innerhalb einer umfangreichen Brennstoffzellenanordnung erlauben, sind üblicherweise als speicherprogrammierbare Steuerungen ausgebildet. Bedingt durch die der Steuerung zugrunde liegenden Zykluszeit für die Abarbeitung des Softwareprogramms kann dies zu einer Verlängerung der Durchlaufzeit des Messsignals und somit zu einer Verlängerung der Reaktionszeit, d.h. zu einer verzögerten Bildung des Abschaltsignals, führen. Ein derartiger rechnergesteuerter Prozess zur Fehlerauswertung und Fehlerbeseitigung ist besonders zeitaufwändig. Dies kann in kritischen Situationen, z.B. bei Bildung von Knallgas, zu einer Zerstörung der Zellen führen.

Der Erfindung liegt daher die Aufgabe zugrunde, ein Verfahren zum Betreiben einer Brennstoffzelle oder einer Brennstoffzellenanordnung mit einer Vielzahl von Brennstoffzellen anzugeben, das mit einfachen Mitteln eine zuverlässige und schnelle Überwachung der oder jeder Brennstoffzelle oder einer Gruppe von Brennstoffzellen auf Funktionsfähigkeit hin erlaubt. Weiterhin soll eine für die Durchführung des Verfahrens besonders geeignete Brennstoffzellenanordnung angegeben werden.

Bezüglich des Verfahrens wird diese Aufgabe erfindungsgemäß gelöst, indem ein Messsignal von der Brennstoffzelle erfasst und einer integrierten Schaltung zur Verarbeitung zugeführt wird, wobei das Messsignal mittels der integrierten Schaltung zu einem den Grad der Funktionsfähigkeit der Brennstoffzelle repräsentierenden Ausgangssignal verarbeitet wird.

Die Erfindung geht dabei von der Überlegung aus, dass ein zuverlässiges und besonders schnelles Verfahren zur Überwachung der Funktionsfähigkeit individueller Brennstoffzellen auf der Überwachung der jeweils gelieferten Elektrodenspannung basieren sollte. Dabei sollte für eine besonders schnelle Weiterverarbeitung der aktuell erfassten Elektrodenspannung mit vergleichsweise geringem Aufwand einerseits die Anzahl von erforderlichen Bauteilen besonders gering gehalten werden, und andererseits die zur Funktionsüberwachung der Brennstoffzelle als Parameter geeignete Elektrodenspannung besonders frühzeitig und somit schnell in ein Ausgangssignal, insbesondere Abschaltsignal, umgesetzt werden. Für eine derartige möglichst schnelle Zellspannungsüberwachung wird daher das Messsignal mittels einer integrierten Schaltung anhand einer dieser zugrunde liegenden logischen Schaltung zu einem den Grad der Funktionsfähigkeit der Brennstoffzelle repräsentierenden Ausgangssignal für die Sicherheitsabschaltung der Gaszuführung der Brennstoffzelle verarbeitet. Dabei ist das Ausgangssignal in eindeutiger Weise mit der von der Brennstoffzelle gelieferten Ausgangs- oder Elektrodenspannung korreliert, so dass über eine Überwachung des Ausgangssignals eine Überwachung der Ausgangs- oder Elektrodenspannung und somit eine Überwachung der Funktionsfähigkeit der Brennstoffzelle ermöglicht ist. Durch die Verarbeitung des Messsignals zu dem Ausgangssignal mittels der integrierten Schaltung ist eine besonders geringe Signallaufzeit bei besonders geringer Verlustleistung aufgrund großer Integrationsdichte gewährleistet.

Zweckmäßigerweise wird als Messsignal ein Spannungssignal verarbeitet. Insbesondere für eine zuverlässige und auch bei einer großen Anzahl von zu überwachenden Brennstoffzellen mit vergleichsweise einfachen Mitteln realisierbaren Funktionsüberwachung der Brennstoffzellen wird bevorzugt die jeweils ermittelte, das heißt aktuell gemessene, Elektrodenspannung mit einem Grenzwert verglichen. Dabei dient der Vergleich der Elektrodenspannung mit dem Grenzwert der Überwachung jeder individuelle Brennstoffzelle derart, dass die Elektrodenspannung dieser Brennstoffzelle einen vorgebbaren Spannungsgrenzwert jeweils gerade über- oder unterschreitet, unter Verzicht auf eine Auswertung des Absolutwerts der jeweiligen Elektrodenspannung.

Vorteilhafterweise wird das Ausgangssignal anhand des Messsignals nach Ablauf einer vorgegebenen Gasvorströmzeit ermittelt. Hierdurch ist sichergestellt, dass die Sicherheitsabschaltung der Brennstoffzelle und somit die Überwachung der aktiven Brennstoffzelle erst dann aktiviert wird, wenn die Betriebsbedingungen für eine aktive Brennstoffzelle gegeben sind, beispielsweise eine Anlaufphase beendet ist.

In einer weiteren bevorzugten Ausführungsform wird das Ausgangssignal zur Deaktivierung der Brennstoffzelle verwendet. Dabei repräsentiert das Ausgangssignal den Grad der Funktionsfähigkeit der Brennstoffzelle, wobei anhand der Analyse des Messsignals die Elektrodenspannung auf Über- oder Unterschreitung des vorgebbaren Spannungsgrenzwertes überwacht und das Ausgangssignal entsprechend auf 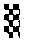 LOW 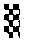 bzw. 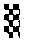 HIGH 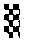 gesetzt wird. Mit anderen Worten: Die Erkennung der Funktionsfähigkeit der jeweiligen Brennstoffzelle erfolgt durch Überprüfung, ob das jeweilige Ausgangssignal (= HIGH-Pegel)gesetzt oder nicht gesetzt ist (= LOW-Pegel). Ein Setzen des Ausgangssignals (= High-Pegel) repräsentiert beispielsweise ein Unterschreiten der Spannung einer der Brennstoffzellen und somit ein fehlerhaftes Verhalten der betreffenden Brennstoffzelle, wodurch das Ausgangssignal zum Deaktivieren der Brennstoffzelle verwendet wird. Unter Deaktivieren wird insbesondere die Abschaltung der Gaszufuhr der Brennstoffzelle verstanden.

Zweckmäßigerweise wird das Messsignal mittels der integrierten Schaltung mit einer Durchlaufzeit von kleiner 1 µs zum Ausgangssignal verarbeitet. Hierdurch ist sichergestellt, dass insbesondere in einem kritischen Zustand einer der Brennstoffzellen, zum Beispiel bei einem plötzlichen Schaden der Membran-Elektronen-Einheit, bei welchem eventuell eine Knallgasverbindung entsteht, das Ausgangssignal derart schnell erzeugt wird, dass eine rechtzeitige Reaktion ermöglicht ist, so dass eine Deaktivierung der Brennstoffzelle möglichst schnell ausgeführt und der kritische Zustand weitgehend sicher beseitigt wird.

Vorzugsweise wird in einer eine Mehrzahl von hintereinander geschalteten Brennstoffzellen umfassenden Brennstoffzellenanordnung jede Brennstoffzelle mittels der integrierten Schaltung auf Funktionsfähigkeit überwacht. Je nach Art und Ausführung der integrierten Schaltung kann je Brennstoffzelle eine zugehörige integrierte Schaltung oder eine Mehrzahl von integrierten Schaltungen vorgesehen sein. Darüber hinaus wird bei der Überwachung mehrerer in Reihe oder elektrisch hintereinander geschalteten Brennstoffzellen die Erkennung eines Störfalls bevorzugt in der Art einer logischen
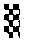 UND 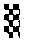 / 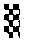 ODER 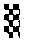 -Verknüpfung ausgeführt. Dabei wird bei Erkennung eines Störfalls in einer der überwachten Brennstoffzellen ein Ausgangssignal oder Störfallsignal für die gesamte Brennstoffzellenanordnung oder einen gesamten Brennstoffzellenstapel ausgegeben. Hierzu ist zweckmäßigerweise je Brennstoffzelle eine zugehörige integrierte Schaltung vorgesehen. Je nach Art und Ausführung der integrierten Schaltung ist eine individuelle Identifizierung der eigentlichen Fehlerquelle, z.B. durch Ausgabe eines Meldesignals, optisch oder akustisch, ermöglicht.

Bezüglich der Brennstoffzellenanordnung mit einer Anzahl von Brennstoffzellen wird die angegebene Aufgabe gelöst, indem der oder jeder Brennstoffzelle ein Signalaufbereitungsmodul zur Erfassung eines zugehörigen Messsignals zugeordnet ist, das zu dessen Verarbeitung in ein den Grad der Funktionsfähigkeit der betreffenden Brennstoffzelle repräsentierendes Ausgangssignal einer integrierten Schaltung zuführbar ist.

Bevorzugt ist die integrierte Schaltung als ein anwenderprogammierbarer Funktionsspeicher, insbesondere als ein komplementär-symmetrisches Metall-Oxid-Halbleiter-Modul ausgebildet(kurz CMOS-Schaltung genannt; CMOS-PAL = complementary metal oxid semiconductor-programmable array logic = komplementär symmetrisches Metall-Oxid-Halbleiter-Modul). Mittels einer derartigen in sogenannter CMOS- und/oder GAL-Technologie ausgebildeten integrierten Schaltung, welche das Messsignal unmittelbar und schnell zu dem Ausgangssignal verarbeitet, sind Zeitverzögerungen aufgrund der Berücksichtigung von Durchlaufzeiten oder Zykluszeiten einer speicherprogrammierbaren Steuerung sicher vermieden. Durch die unmittelbare und direkte Verarbeitung des Messsignals gegenüber der zyklischen Bearbeitung durch eine speicherprogrammierbare Steuerung ist ein Zeitgewinn bei der Verarbeitung von mindestens 60 ms ermöglicht. Hierdurch ist im Fehlerfall der Brennstoffzelle ein möglicher Schaden weitgehend sicher vermieden, zumindest aber begrenzt. Mittels des Signalaufbereitungsmoduls ist gleichzeitig auf besonders einfache Weise eine zuverlässige Isolierung und Potentialentkopplung von der zu überwachenden Brennstoffzelle oder Brennstoffzellenanordnung gewährleistet.

Zur Erweiterung des Funktionsumfangs der integrierten Schaltung zur Bildung des Ausgangssignals sind zweckmäßigerweise mehrere anwenderprogrammierbare Funktionsspeicher zu einem komplexen anwenderprogrammierbaren Funktionsbaustein (kurz PLD-Baustein genannt; PLD = programmable logic device = programmierbarer Logikbaustein) verknüpft. Hierbei werden je nach Art und Ausführung der integrierten Schaltung mehrere CMOS-Schaltungen beispielsweise auf einer Leiterkarte bevorzugt in sogenannten SMD- und GAL-Modulen (SMD = surface mounting device; GAL = generic array logic) angeordnet. Für eine besonders einfache Struktur des komplexen PLD-Bausteins sind die anwenderprogrammierbaren Funktionsspeicher oder CMOS-Schaltungen jeweils mindestens einer die Sicherheitsabschaltung der Brennstoffzelle repräsentierenden Funktion zugeordnet. Bevorzugt ist ein erster Funktionsspeicher zur Ermittlung der Gasvorströmzeit vorgesehen. Mittels des die Gasvorströmzeit ermittelnden ersten Funktionsspeichers wird sichergestellt, dass die Überwachung der Brennstoffzelle erst dann beginnt, wenn die Anlaufphase der Brennstoffzelle beendet ist. Beispielsweise wird dazu der Ablauf einer Vorströmzeit des Gases für die Brennstoffzelle von ca. 2s überwacht. Hierzu umfasst der erste Funktionsspeicher zweckmäßigerweise einen Zähler.

Zur Aktivierung der und/oder jeder Brennstoffzelle ist zweckmäßigerweise ein zweiter Funktionsspeicher vorgesehen. Je nach Art und Ausführung des die Aktivierung der Brennstoffzelle ausführenden zweiten Funktionsspeichers kann diese zum einen in der Anlaufphase nach bereits abgelaufener Gasvorströmzeit zur Zwangsaktivierung der Brennstoffzelle verwendet werden. Hierzu ist die betreffende CMOS-Schaltung oder der zweite Funktionsspeicher mit dem Ausgang des die Gasvorströmzeit bestimmenden ersten Funktionsspeichers verbunden. Des Weiteren ist der zweite Funktionsspeicher mit mindestens einem Signal, insbesondere einem Betriebssignal einer zugrunde liegenden Anlage, zum Beispiel eines Fahrzeuges, verbunden. Hierbei erfolgt eine Aktivierung der Brennstoffzelle des zweiten Funktionsspeichers unter Berücksichtigung des Start-/Stoppvorgangs des Fahrzeuges. Somit wird mittels des zweiten Funktionsspeichers zum einen der Ablauf der Gasvorströmzeit, das Start-/Stoppsignal der betreffenden Anlage sowie eine eventuelle Zwangsaktivierung der Brennstoffzelle bei der Aktivierung der Brennstoffzelle berücksichtigt. Das vom zweiten Funktionsspeicher ausgehende Signal zur Aktivierung der Brennstoffzelle dient insbesondere der Einschaltung der Gaszuführung für die betreffende Brennstoffzelle.

Zur Überwachung der Funktionalität der Brennstoffzelle ist zweckmäßigerweise ein dritter Funktionsspeicher zur Analyse des Messsignals vorgesehen. Der dritte Funktionsspeicher ist dazu eingangsseitig mit dem ersten Funktionsspeicher zur Bestimmung der Gasvorströmzeit und mit dem zweiten Funktionsspeicher zur Bestimmung der Aktivierung der und/oder jeder Brennstoffzelle sowie dem Signalaufbereitungsmodul zur Zuführung des Messsignals verbunden. Anhand der eingangsseitig an dem dritten Funktionsspeicher anliegenden Signale wird die und/oder jede aktive Zelle auf ihre Funktionsfähigkeit hin überwacht. Für eine im Fehlerfall der Brennstoffzelle gegebenenfalls erforderlichen Sicherheitsabschaltung der Gaszufuhr ist zweckmäßigerweise ein vierter Funktionsspeicher zur Deaktivierung der und/oder jeder Brennstoffzelle vorgesehen.

Die mit der Erfindung erzielten Vorteile bestehen insbesondere darin, dass durch eine unmittelbare und direkte Verarbeitung des Messsignals zu einem die Sicherheitsabschaltung der Gaszufuhr bewirkenden Ausgangssignals mittels der integrierten Schaltung eine rechtzeitige Sicherheitsabschaltung der Brennstoffzelle gewährleistet ist. Insbesondere sind durch eine derartige direkte Verarbeitung des Messsignals Durchlaufzeiten von kleiner 1µs ermöglicht. Darüber hinaus ist durch die Integration der logischen Sicherheitsabschaltung auf eine integrierte Schaltung, insbesondere eine CMOSund/oder GAL-Schaltung, eine möglichst kompakte und anwenderspezifisch programmierbare Schaltung gegeben, welche eine besonders hohe Integrationsdichte und besonders geringe Bauform aufweist.

Ausführungsbeispiele der Erfindung werden anhand einer Zeichnung näher erläutert. Darin zeigen:
- Figur 1: schematisch eine Brennstoffzellenanordnung mit einer Anzahl von Brennstoffzellen und mit einem Signalaufbereitungsmodul sowie einem als integrierte Schaltung ausgeführten Überwachungssystem, und
- Figur 2: schematisch die integrierte Schaltung nach Figur 1.

Gleiche Teile sind in beiden Figuren mit den selben Bezugszeichen versehen.

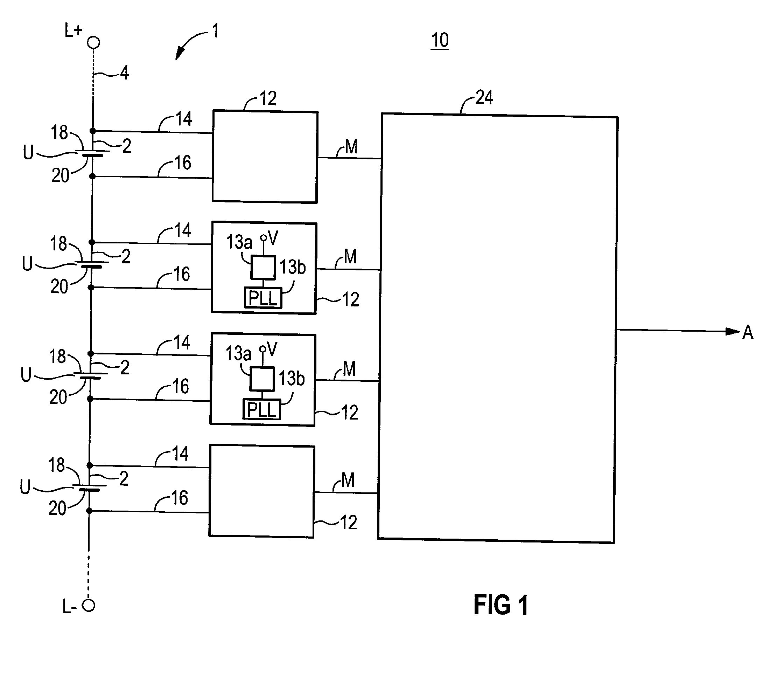

Die Brennstoffzellenanordnung 1 gemäß Figur 1 ist als Gleichstromquelle zur Erzeugung elektrischer Energie ausgebildet. Die Brennstoffzellenanordnung 1 umfasst eine Anzahl von elektrisch in Reihe oder hintereinander geschalteten Brennstoffzellen 2, von denen im Ausführungsbeispiel lediglich vier in schematischer Darstellung gezeigt sind. Die Brennstoffzellenanordnung 1 kann aber auch jede beliebige andere Anzahl von Brennstoffzellen 2 umfassen, wobei sich im konkreten Fall die insgesamt vorgesehene Anzahl von Brennstoffzellen 2 nach der durch den Einsatzzweck oder die Last vorgegebene Gesamtspannung und der von einer einzelnen Brennstoffzelle 2 lieferbaren Ausgangs- oder Elektrodenspannung U richtet. Durch die Hintereinanderschaltung der Brennstoffzellen 2 ist die insgesamt von der Brennstoffzellenanordnung 1 lieferbare Ausgangsspannung gegeben durch die Summe der Ausgangsspannungen der einzelnen Brennstoffzellen 2, so dass durch eine geeignete Wahl der Anzahl der Brennstoffzellen 2 sichergestellt werden kann, dass die Brennstoffzellenanordnung 1 eine geforderte Sollspannung als Ausgangsspannung liefern kann. Die Brennstoffzellenanordnung 1 und somit auch die in Reihe geschalteten Brennstoffzellen 2 sind über einen in Figur 1 angedeuteten Lastkreis 4 mit einer nicht näher dargestellten Last, beispielsweise mit einem Gleichstromverbraucher eines Fahrzeugs verbunden.

Zusätzlich zu den Brennstoffzellen 2 umfasst die Brennstoffzellenanordnung 1 ein Überwachungssystem 10, mit dem jede der Brennstoffzellen 2 kontinuierlich auf Funktionsfähigkeit überwacht wird. Das Überwachungssystem 10 umfasst für jede Brennstoffzelle 2 ein dieser zugeordnetes Signalaufbereitungsmodul 12. Je nach Art und Ausführung des Signalaufbereitungsmoduls 12 ist dieses beispielsweise als Optokoppler in Kombination mit einer Spannungsaufbereitungseinheit 13a und einer PLL-Schaltung 13b (PLL = Phase-Locked-Loop-Schaltung) ausgeführt. Das jeweilige Signalaufbereitungsmodul 12 liegt auf dem gleichen Potenzial wie die jeweilige Brennstoffzelle 2. Die Entkopplung erfolgt jeweils mit nicht näher dargestellten Optokopplern. Die Versorgungsspannung V wird dem Signalaufbereitungsmodul 12 als Wechselspannung zugeführt. Ein nicht näher dargestellter Miniatur-Trenntransformator (= potentialfreie Spannungsversorgung) mit anschließender Gleichrichtung und Spannungsstabilisation übernimmt dabei die entkoppelte Versorgungsspannung V für das Signalaufbereitungsmodul 12. Jedes Signalaufbereitungsmodul 12 ist eingangsseitig über Leitungen 14, 16 mit den Elektroden 18, 20 der jeweils zugeordneten Brennstoffzelle 2 verbunden. Das jeweilige Signalaufbereitungsmodul 12 ist somit elektrisch parallel zum Lastkreis 4 und zu den jeweils anderen, mit der jeweiligen Brennstoffzelle 2 in Reihe geschalteten weiteren Brennstoffzellen 2 geschaltet.

Ausgangsseitig sind die Signalaufbereitungsmodule 12 der betreffenden Brennstoffzellen 2 mit einer integrierten Schaltung 24 (im Weiteren Auswerteeinheit 24 genannt) verbunden.

Das jeweilige Signalaufbereitungsmodul 12 ist für die Erfassung und Aufbereitung der von der zugehörigen Brennstoffzelle 2 gelieferten Elektrodenspannung U zu einem elektrischen Messsignal M ausgebildet. Eine Weiterverarbeitung dieses elektrischen Messsignals M erfolgt somit im Ausführungsbeispiel mittels der Auswerteeinheit 24. Zur Erzeugung eines Ausgangssignals A anhand des von der jeweiligen Brennstoffzelle 2 erfassten Messsignals M mittels der Auswerteeinheit 24 oder integrierten Schaltung ist diese in der Art einer logischen 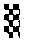 UND 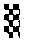 / 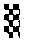 ODER 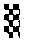 -Verknüpfung ausgebildet, welche freiprogrammierbar ist. Das von der Auswerteeinheit 24 erzeugte Ausgangssignal A führt in der Art einer Schutzabschaltung in nicht näher dargestellter Art und Weise dazu, dass die Brennstoffzufuhr, insbesondere die Gaszufuhr zur jeweils betroffenen Brennstoffzelle 2 oder bedarfsweise zur gesamten Brennstoffzellenanordnung 1 unterbunden wird.

Die Brennstoffzellenanordnung 1 und insbesondere das Überwachungssystem 10 ist für eine besonders einfache und schnelle Überwachung der Funktionsfähigkeit der Brennstoffzellen 2 ausgebildet. Beim Betrieb der Brennstoffzellenanordnung 1 erzeugt nämlich jede Brennstoffzelle 2 die Ausgangs- oder Elektronenspannung U. Als Kriterium zur Feststellung ob eine Brennstoffzelle 2 funktionsfähig ist, ist ein Vergleich der von ihr gelieferten Elektronenspannung U mit einem Spannungsgrenzwert UG erforderlich: Falls die Elektronenspannung U einer Brennstoffzelle 2 den Spannungsgrenzwert UG übersteigt, wird auf eine Funktionsfähigkeit der Brennstoffzelle 2 geschlossen. Falls dagegen die Elektrodenspannung U der Brennstoffzelle 2 geringer ist als der Spannungsgrenzwert UG, so wird auf Fehlerhaftigkeit der Brennstoffzelle 2 geschlossen und eine Brennstoffzufuhr zu dieser Brennstoffzelle 2 sofort unterbunden.

Zur Feststellung, ob eine Brennstoffzelle 2 eine Elektronenspannung U von mehr als dem Spannungsgrenzwert UG erzeugt und somit als funktionsfähig anzusehen ist, ist die Brennstoffzellenanordnung 1 derart ausgebildet, dass das einer Brennstoffzelle 2 zugeordnete Signalaufbereitungsmodul 12 dann ein an die Auswerteeinheit 24 weiterleitbares Messsignal M erzeugt, wenn die Elektrodenspannung U der entsprechenden Brennstoffzelle 2 den Spannungsgrenzwert UG übersteigt. Die Erzeugung des Messsignals M durch das Signalaufbereitungsmodul 12 unterbleibt hingegen, wenn die Elektrodenspannung U der betreffenden Brennstoffzelle 2 geringer ist als der Spannungsgrenzwert UG.

Dazu ist die im Signalaufbereitungsmodul 12 angeordnete PLL-Schaltung 13b mittels eines Frequenzeinganges für verschiedene den Spannungsgrenzwert UG repräsentierende Referenzspannungen mit entsprechenden Sollfrequenzen derart dimensionert, dass sich in dem Fall, in welchem die Ausgangs- oder Elektrodenspannung U der zugehörigen Brennstoffzelle 2 gleich oder größer als der Spannungsgrenzwert UG ist, am Ausgang der PLL-Schaltung 13b ein Messsignal M ergibt, bis die Sollfrequenz am Eingang der PLL-Schaltung 13b erreicht ist. Mit anderen Worten: Die Frequenz der PLL-Schaltung verhält sich proportional zur Elektrodenspannung U der betreffenden Brennstoffzelle 2. Der charakteristische Spannungsgrenzwert UG ist dadurch definiert, dass das Signalaufbereitungsmodul 12 mittels der Elektrodenspannung U der Brennstoffzelle 2 die betreffende Ersatzreferenzfrequenz der PLL-Schaltung 13b derart steuert, dass bei Überschreitung der an der PLL-Schaltung 13b eingestellten Sollfrequenz und somit bei Überschreiten des Spannungsgrenzwertes UG ( = 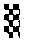 LOW 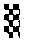 -Pegel) ein Messsignal M erzeugt wird, bei Unterschreiten jedoch nicht (= 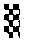 HIGH 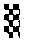 -Pegel).

In der Brennstoffzellenanordnung 1 ist somit sichergestellt, dass für den Fall, dass sämtliche Signalaufbereitungsmodule 12 ein Messsignal M erzeugen, von einem störungsfreien Betrieb sämtlicher Brennstoffzellen 2 ausgegangen werden kann. Bleibt jedoch für mindestens eines der Signalaufbereitungsmodule 12 das Messsignal M aus, so ist von einem Störfall für die betreffende Brennstoffzelle 2 auszugehen. In diesem Fall wird die Brennstoffzufuhr zur betroffenen Brennstoffzelle 2 oder gegebenenfalls die Brennstoffzufuhr zur gesamten Brennstoffzellenanordnung 1 unterbunden und mittels der Auswerteeinheit 24 ein Ausgangssignal A zur Sicherheitsabschaltung der gesamten Brennstoffzellenanordnung 1 beziehungsweise der betreffenden Brennstoffzelle 2 erzeugt.

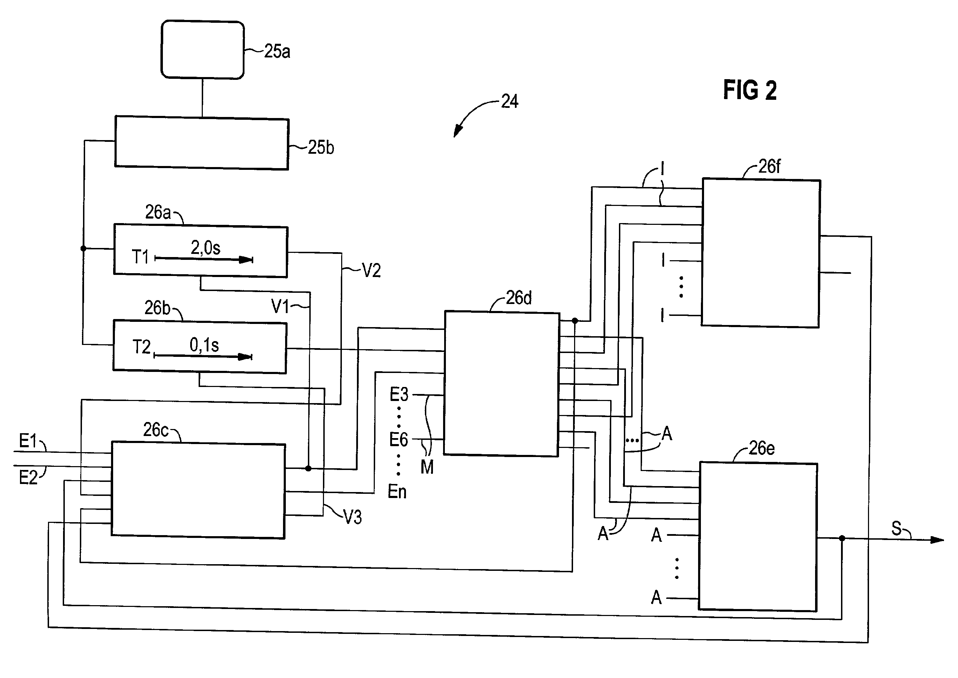

Die Figur 2 zeigt eine mögliche Ausführungsform der Auswerteeinheit 24 (auch integrierte Schaltung 24 genannt).

Die als integrierte Schaltung ausgebildete Auswerteeinheit 24 umfasst eine Mehrzahl von anwenderprogrammierbaren Funktionsspeichern 26a bis 26z, welche verschiedenen Überwachungsfunktionen der oder allen Brennstoffzellen 2 zugeordnet werden. Zur Erzeugung des die Sicherheitsabschaltung der Brennstoffzelle 2 bewirkenden Ausgangssignals A sind die Auswerteeinheit 24 und deren anwenderprogrammierbare Funktionsspeicher 26a bis 26z in der Art von logischen "ODER"-/"UND"-Verknüpfung derart ausgebildet, dass für jede für eine individuelle Brennstoffzelle 2 erkannte Störung ein Störungsoder Ausgangssignal A für die betreffende Brennstoffzelle 2 und/oder die gesamte Brennstoffzellenanordnung 1 erzeugt wird. Das von der Auswerteeinheit 24 erzeugte Ausgangssignal A führt in der Art einer Schutzabschaltung in nicht näher dargestellter Weise dazu, dass die Brennstoffzufuhr zur jeweils betroffenen Brennstoffzelle 2 oder bedarfsweise zur gesamten Brennstoffzellenanordnung 1 unterbunden wird.

Das Überwachungssystem 10 ist mit den funktionsspezifischen anwenderprogrammierbaren Funktionsspeichern 26a bis 26z für eine besonders einfache Überwachung der Funktionsfähigkeit der Brennstoffzellen 2 ausgebildet. Bedingt durch die bei einer Brennstoffzellenanordnung 1 auftretenden Anlauf- oder Startphase ist ein erster Funktionsspeicher 26a zur Ermittlung der Gasvorströmzeit T1 vorgesehen. Ein zweiter Funktionsspeicher 26b ist in der Startphase der Brennstoffzellenanordnung 1 gegebenenfalls für eine Zwangsaktivierung der Brennstoffzellen 2 vorgesehen. Zur Identifizierung der Anlaufphase der Brennstoffzellenanordnung 1 ist ein dritter Funktionsspeicher 26c vorgesehen, welcher eingangsseitig (= Eingänge E1, E2) mit einer den Start oder den Stopp der Anlage oder des Fahrzeugs bewirkenden Komponente, z.B. dem Zünder, verbunden ist. Wird nun mittels des dritten Funktionsspeichers 26c anhand des am Eingang E1 anliegenden Startsignals ein Start der Brennstoffzellenanordnung 2 identifiziert, so wird über eine Verbindung des dritten Funktionsspeichers 26c mit dem ersten Funktionsspeicher 26a ein Zeitmodul zur Ermittlung der Gasvorströmzeit T1 gestartet. Nach Ablauf der Gasvorströmzeit T1 von ca. 2s wird die Überwachung der Brennstoffzellenanordnung 1 mittels einer Verbindung vom ersten Funktionsspeicher 26a zum dritten Funktionsspeicher 26c gestartet. Dabei wird die erste Brennstoffzelle 2 auf deren Einschaltung innerhalb der vorgegebenen Gasvorströmzeit T1 überwacht. Dazu wird mittels des im zweiten Funktionsspeicher 26b vorgesehenen Zeitmoduls T2 der Einschaltvorgang oder die Aktivierung der ersten Brennstoffzelle 2 überwacht. Dabei wird nach Ablauf des Zeitmoduls des zweiten Funktionsspeichers 26b eine Zellenzwangsaktivierung der ersten Brennstoffzelle 2 ausgelöst. Mit Auslösung der Zellenzwangsaktivierung wird die Sicherheitsüberwachung mittels eines vierten Funktionsspeichers 26d gestartet.

Die beiden jeweils ein Zeitmodul T1 bzw. T2 aufweisenden Funktionsspeicher 26a und 26b werden über einen Taktgenerator 25a und einen Frequenzteiler 25b getaktet. Der vierte Funktionsspeicher 26d ist eingangsseitig mit dem dritten Funktionsspeicher 26c bzw. über diesen Funktionsspeicher 26c mit den die Startphase überwachenden ersten und zweiten Funktionsspeichern 26a und 26b verbunden. Des Weiteren ist der vierte Funktionsspeicher 26d zur Analyse der Elektrodenspannung U und somit zur Überwachung der Brennstoffzellenanordnung 1 eingangsseitig mit den Signalaufbereitungsmodulen 12 einer jeden Brennstoffzelle 2 verbunden. Beispielhaft sind hier vier Eingänge E3 bis E6 von betreffenden Signalaufbereitungsmodulen 12 von vier Brennstoffzellen 2 dargestellt. Je nach Anzahl der die Brennstoffzellenanordnung 1 bildenden Brennstoffzellen 2 können mehr oder weniger Eingänge E3 bis En am Funktionsspeicher 26d zur Analyse der Elektrodenspannung U vorgesehen sein. Mittels des Analysefunktionsspeichers 26d werden die nach der Aktivierung der jeweiligen Brennstoffzelle 2 erfassten Messsignale M der betreffenden Elektrodenspannung U auf Einhaltung des Spannungsgrenzwertes UG überwacht.

Als Kriterium zur Feststellung, ob eine der Brennstoffzellen 2 funktionsfähig ist, wird mittels des Funktionsspeichers 26d ein Vergleich der von der betreffenden Brennstoffzelle 2 gelieferten Elektrodenspannung U mit einem Spannungsgrenzwert UG ausgeführt. Falls die Elektrodenspannung U der betreffenden Brennstoffzelle 2 den Spannungsgrenzwert UG übersteigt, wird auf Funktionsfähigkeit der Brennstoffzelle 2 geschlossen. Falls dagegen die Elektrodenspannung U der Brennstoffzelle 2 geringer ist als der Spannungsgrenzwert UG, so wird auf Fehlerhaftigkeit der Brennstoffzelle 2 geschlossen und eine Brennstoffzufuhr zu dieser Brennstoffzelle 2 sofort unterbunden. Des Weiteren wird mittels der Kombination des dritten und vierten Funktionsspeichers 26c bzw. 26d die Reihenfolge der Aktivierung der Brennstoffzellen 2 der Brennstoffzellenanordnung 1 auf Richtigkeit überwacht. Kommt es gegebenenfalls zu einer schnelleren Aktivierung einer der Brennstoffzellen 2 als nach der vorgegebenen Reihenfolge, d.h. die zweite Brennstoffzelle 2 wird vor der ersten Brennstoffzelle 2 aktiviert, so wird dies als ein Fehler der betreffenden Brennstoffzelle 2 identifiziert. Je nach Art und Ausführung kann das Überwachungssystem 10, insbesondere die Auswerteeinheit 24, um eine chronologische Schaltfunktion zur Aktivierung der Brennstoffzellen 2 erweitert werden. Hierdurch sind eventuell versehentliche Fehlabschaltungen vermieden.

Mittels der an den Eingängen E3 bis E6 anliegenden Messsignalen M werden anhand des vierten Funktionsspeichers 26d zur Analyse der Brennstoffzellenanordnung 1 die Messsignale M dahingehend ausgewertet, dass bei Anliegen sämtlicher Messsignale M aller Brennstoffzellen 2 der Brennstoffzellenanordnung 1 von einem störungsfreien Betrieb ausgegangen werden kann. Bleibt jedoch für mindestens eine der Signalaufbereitungsmodule 12 das Messsignal aus, so ist von einem Störfall auszugehen. Wird ein derartiger Fehler einer der Brennstoffzellen 2 oder der Brennstoffanordnung 1 mittels des vierten Funktionsspeichers 26d identifiziert, wird ein entsprechendes Ausgangssignal A an einen weiteren fünften Funktionsspeicher 26e zur Generierung von erforderlichen Schutzmaßnahmen übertragen. Mittels des Funktionsspeichers 26e wird bei Anliegen einer der Fehlermeldungen ein Steuersignal S zur Sicherheitsabschaltung der einzelnen betroffenen Brennstoffzelle 2 und/oder der gesamten Brennstoffzellenanordnung 1 ausgelöst. Je nach Art und Ausführung der Auswerteeinheit 24 weist diese einen dem vierten Funktionsspeicher 26d nachgeschalteten weiteren sechsten Funktionsspeicher 26f auf. Der sechste Funktionsspeicher 26f dient der sicheren Gaseinschaltung. Dazu wird durch einfache Verknüpfungsschaltung überwacht, ob sämtliche Messsignale M aller Brennstoffzellen 2 überprüft worden sind. Ist dies der Fall, dann wird ein Impuls zur Gaszuführung ausgegeben.

In Abhängigkeit von der Art und Ausführung der Überwachungseinheit 10 kann je nach Bedarfsfall eine kontinuierliche oder zyklische Funktionsüberwachung jeder einzelnen Brennstoffzelle 2 mittels der aus den verschiedenen anwenderprogrammierbaren Funktionsspeichern 26a bis 26f in besonders einfacher Weise ermöglichen, wobei bei Ausbleiben eines Messsignals M auf Eintritt einer Störung der zugehörigen Brennstoffzelle 2 geschlossen wird. Eine besonders hohe Fehlersicherheit dieses Überwachungskonzepts und eine besonders schnelle Auslösung eines Schutzsignals ist dadurch gewährleistet, dass das Überwachungssystem 10 zur Überwachung der Funktionsfähigkeit der Brennstoffzelle 2 durch anwenderprogrammierbare Funktionsspeicher 26a bis 26f erfolgt: Somit kann eine unmittelbare und direkte Verarbeitung unabhängig vom Betriebszustand oder der Verfügbarkeit von weiteren Komponenten erfolgen. Hierbei wird bei Anliegen einer Elektrodenspannung U und somit eines Messsignals M an der integrierten Schaltung 24 eine besonders zuverlässige und schnelle Verarbeitung des Messsignals M zu dem die Sicherheitsmaßnahmen auslösenden Schutzsignal S sichergestellt.

## Patentansprüche

1. Verfahren zum Betreiben einer Brennstoffzelle (2), bei dem ein Messsignal (M) von der Brennstoffzelle (2) erfasst und einer integrierten Schaltung (24) zur Verarbeitung zugeführt wird, wobei das Messsignal mittels der integrierten Schaltung (24) zu einem den Grad der Funktionsfähigkeit der Brennstoffzelle (2) repräsentierenden Ausgangssignal (A) verarbeitet wird.

2. Verfahren nach Anspruch 1, bei dem als Messsignal (M)ein Spannungssignal (U) verarbeitet wird.

3. Verfahren nach Anspruch 1 oder 2, bei dem das Ausgangssignal (A) anhand des Messsignals (M) nach Ablauf einer vorgegebenen Gasvorströmzeit (T1) ermittelt wird.

4. Verfahren nach einem der Ansprüche 1 bis 3, bei dem das Ausgangssignal (A) zur Deaktivierung der Brennstoffzelle (2) verwendet wird.

5. Verfahren nach einem der Ansprüche 1 bis 4, bei dem das Messsignal (M) mittels der integrierten Schaltung (24) mit einer Durchlaufzeit von kleiner 1 µs zum Ausgangssignal (A) verarbeitet wird.

6. Verfahren nach einem der Ansprüche 1 bis 5, bei dem in einer eine Mehrzahl von hintereinander geschalteten Brennstoffzellen (2) umfassenden Brennstoffzellenanordnung (1) jede Brennstoffzelle (2) mittels der integrierten Schaltung (24) anhand des Ausgangssignals (A) auf Funktionsfähigkeit überwacht wird.

7. Brennstoffzellenanordnung (1) mit einer Anzahl von Brennstoffzellen (2), wobei der oder jeder Brennstoffzelle (2) ein Signalaufbereitungsmodul (12) zur Erfassung eines zugehörigen Messsignals (M) zugeordnet ist, das zu dessen Verarbeitung in ein den Grad der Funktionsfähigkeit der betreffenden Brennstoffzelle (2) repräsentierendes Ausgangssignal (A) einer integrierten Schaltung (24) zuführbar ist.

8. Brennstoffzellenanordnung nach Anspruch 7, bei der die integrierte Schaltung (24) als ein anwenderprogrammierbarer Funktionsspeicher (26a bis 26z) ausgebildet ist.

9. Brennstoffzellenanordnung nach Anspruch 8, bei der mehrere Funktionsspeicher (26a bis 26z) zu einem komplexen anwenderprogrammierbaren Funktionsbaustein verknüpft sind.

10. Brennstoffzellenanordnung nach Anspruch 8 oder 9, bei der ein erster Funktionsspeicher (26a) zur Ermittlung der Gasvorströmzeit (T1) vorgesehen ist.

11. Brennstoffzellenanordnung nach einem der Ansprüche 8 bis 10, bei der ein zweiter Funktionsspeicher (26b) zur Aktivierung der und/oder jeder Brennstoffzelle (2) vorgesehen ist.

12. Brennstoffzellenanordnung nach einem der Ansprüche 8 bis 11, bei der ein dritter Funktionsspeicher (26c) zur Deaktivierung der und/oder jeder Brennstoffzelle (2) vorgesehen ist.

13. Brennstoffzellenanordnung nach einem der Ansprüche 8 bis 12, bei der ein vierter Funktionsspeicher (26d) zur Analyse des Messsignals (M) ausgebildet ist.
